**Europäisches Patentamt**

**European Patent Office**

**Office européen des brevets**

(19)

(11) Publication number: **0 076 338**
**A1**

(12) ## EUROPEAN PATENT APPLICATION

(21) Application number: **81107912.8**

(22) Date of filing: **05.10.81**

(51) Int. Cl.³: **G 01 N 21/53**
**G 08 B 17/10**

(43) Date of publication of application:
**13.04.83 Bulletin 83/15**

(84) Designated Contracting States:
**BE CH DE FR GB LI NL SE**

(71) Applicant: **GAMEWELL CORPORATION**
**7, Industrial Park Road**
**Medway Massachusetts 02053(US)**

(72) Inventor: **Solomon, Elias Ezekiel**
**60 Crescent Street**
**Duxbury Massachusetts 02332(US)**

(74) Representative: **Modiano, Guido et al,**
**MODIANO & ASSOCIATI S.A.S. Via Meravigli, 16**
**I-20123 Milan(IT)**

(54) Broad-spectrum particle detector.

(57) An optical detector employs either a plurality of transmitters, with a single light sensor, a plurality of light sensors with a single transmitter, or both a plurality of transmitters and sensors with the components being arranged at different angles to each other to provide a broad spectrum (particle size) of detection. In one system employing two transmitters and one receiver the line of sight of field of view of the receiver is disposed, for example, at 90° and 150°, respectively, to the lines of sight of the transmitter. Efficiency can be improved by arranging the light emitting diodes in series and operating them either concurrently or alternatively. In one embodiment a pair of receivers are used in association with a pair of transmitters while in still another embodiment a pair of transmitters are associated with a single receiver having a relatively large sensitivity area preferably of curved or parabolic shape. A combination optical and ionization detector is also provided employing a comparator wherein the output of the ionization detector is used to alter the threshold level of the comparator with the main input of the comparator being coupled from the optical detector. Alternatively, a combination detector of this type can be used wherein the optical detector is used to change the threshold level and the main input to the comparator is from the output of the ionization detector. In another arrangement the gain of an optical detector may be altered by the output from an ionization detector and vice versa. A summing circuit may also be employed wherein the outputs of the optical and ionization detectors are additive.

Fig. 1A

0076338

The present invention pertains to the detection of particles of combustion, and pertains, more particularly, to a particle detector characterized by a broad-spectrum of detection capable of detecting a wider range of particle sizes. This is achieved in accordance with the present invention with no additional power requirements and with the use of relatively simple electronic means.

There are many types of detectors including combinations of detectors that sense particulates and which are either generated by combustion or are in suspension in air as dust particles.

It is common for the optical portion of the detector when employing a combination detector, to employ a mono-chromatic light source, such as a Galium Arsenide photo-diode. Furthermore, the ionization and optical detectors may be connected logically in an AND or an OR configuration. For example, there may be an alarm condition based upon either optical detection or ionization detection, or there may be a detection in either channel placed upon both a prealarm condition and a full alarm condition.

Reference is also made herein to my issued U.S. Patents 4,126,790 and 4,121,110 which describe optical detectors employing such techniques as direct optical biasing and control means for the optical transmitters and receivers.

One of the objects of the present invention is to provide an improved optical detection system that increases the spectrum of particle size detection.

Another object of the present invention is to provide an improved combination type of detector having improved detection sensitivity.

Still a further object of the present invention is to provide an improved optical detection system having broad spectrum detection characteristics with no substantial additional power requirements.

In accordance with the present invention a greater dynamic range of particle size detection is realized by taking advantage of the scattering properties of particulates. In the prior art it is common, such as shown in my U.S. Patent 4,121,110 to have the optical receiver arranged at a fixed angle to the optical transmitter. This angle between the line of sight of the transmitter and receiver although fixed, may be fixed at different angles. For example, in some arrangements an angle is selected to provide a greater efficiency of forward scattering by particulates. In other arrangements such as shown in U.S. Patent 4,102,997 there is a more acute angle between the transmitter and receiver in order to detect larger particulates. However, it is usually a case of compromise between a more and less acute angle so as to compromise between greater efficiency and the detection of larger particulates, at a lowered efficiency.

An object of the present invention is thus to provide an optimization with greater efficiency and also detection of larger particulates by means of the use of either a pair of transmitters or a pair of receivers, or both. There are described herein a number of different versions for providing this broader spectrum of detection. It has been found in accordance with the invention that the larger particles are more efficiently detected with the use of a more acute beam/receiver path while the detection of smaller particles is enhanced with the use of a more obtuse beam/receiver path.

To accomplish the foregoing and other objects of this invention there is provided an optical detection system that, in one embodiment includes a plurality of optical transmitters each having a beam path, means supporting the transmitters, at least one optical receiver having a field of view and means supporting the optical receiver.  The beam path of the transmitters are each disposed at a different angle to the field of view of theoptical receiver.  One embodiment employs two light sources, however, more than two may be used depending upon the application, the costs and the total physical size of the unit.  With each beam being disposed at a different angle to the receiver, it is thus possible to take the advantage of larger particle detections which occur at the more acute beam/receiver path and also smaller particle detections resulting from the less acute or more obtuse beam/receiver path. In one example disclosed herein the respective angles may be 90° and 150° for the respective angles of the transmitters to the common receiver.

In an alternate arrangement there may be provided a plurality of optical receivers each having a receiving field of view and used in association with at least one optical transmitter having a beam path.  In such an arrangement the field of view of the receivers are each disposed at a different angle to the beam path of the transmitter.  In still another embodiment in accordance with the invention there may be provided two or more receivers and two or more transmitters. With all such arrangements, there is a substantial improvement in the spectrum of particle sizes that is detected along with an improved efficiency of detection.  In still another version there may be used a single receiver associated with two separate transmitters with the receiver having a relatively large sensitivity area distributed over a large acceptance angle.  For example, the receiver may have a concave or parabolic surface.

In accordance with another feature of the present invention there is provided an optical detection system having a transmitter section and a receiver section wherein the transmitter section includes a plurality of light emitting means and means for commonly driving these light emitting means to provide concurrent illumination thereof. In the preferred arrangement Galium Arsenide light emitting diodes are employed and are coupled in series with little or no increased power or current consumption being provided in two diodes over a single diode. The net effect is to increase the amount of radiated power into the field of view of the receiver without any appreciable current consumption. In an alternate arrangement these diodes may be operated sequentially. This allows for a smaller duty cycle and thus increases the life span of these devices. For example, the diodes could be controlled from a flip-flop type device providing alternate operation of the diodes on a 50% duty cycle.

In accordance with a further aspect of the present invention there is provided an improved combination detector such as one employing optical detection means and ionization detection means. In this regard the optical detection means includes optical detection circuitry and also the ionization detection means includes ionization detection circuitry. In accordance with the present invention, rather than connecting the different detection sections in a logical (AND/OR) configuration, one of the sections is essentially used to control the threshhold or gain of a signal from the other section. For example, in one version, the optical detection means includes means for providing a detection signal while the ionization detection means includes means for providing a reference or threshhold signal. The arrangement also includes output decision means responsive to the detection signal and the reference or threshhold signal for providing an output alarm signal. In an alternative version of the invention the threshhold or reference level may be provided by the optical portion of the system rather than the ionization portion of the system. In accordance with the invention as described in one embodiment herein are the output decision means may include a comparator means having one input for receiving the reference or threshhold signal and another trigger input for receiving the detection signal. There may be provided a threshhold circuit in the form of a voltage divider circuit having a node coupled to the one input of the comparator and the semi-conductor means such as a bipolar transistor providing a variable impedance for the threshhold circuit and controlled from one of the detection sections such as the ionization detection circuitry. In an alternative embodiment of the invention the output decision means may include a gain control means which may comprise a voltage divider means including a semi-conductor control means the conduction of which is controlled from the reference section of the system. Again, either the optical or the ionization portions of the system can be used for the reference section or the gain control section. Alternatively, rather than the two sections being optical and ionization, the two different sections could both be optical or both be ionization, or possibly other types of detection. The output decision means may also include summing means such as a current summing circuit having an input reference, and a second control input which is the sum of currents from the two different sections such as an optical detection section and an ionization detection section.

Numerous other objects, features and advantages of the invention should now become apparent upon a reading of the following detailed description taken in conjunction with the accompanying drawings, in which:

FIG. 1A schematically depicts one optical system in accordance with the invention employing two optical transmitters and a single optical receiver;

FIG. 1B schematically depicts an alternate arrangement for the system also employing two transmitters and a single receiver;

FIG. 2 is a circuit diagram depicting one embodiment for driving two series arranged light emitting diodes;

FIG. 3 shows a circuit diagram for the alternative control of a pair of light emitting diodes;

FIG. 4 schematically depicts an optical system employing two transmitters and two receivers, and showing the respective angles that may be used therebetween;

FIG. 5 is a schematic diagram of a two transmitter arrangement employing a wide angle receiver;

FIG. 6 is a circuit diagram for a combination detector of the type employing an optical detection section and an ionization detection section and an output comparator, the reference level to which is controlled from the ionization detection section;

FIG. 7 is a further schematic circuit diagram similar to the one shown in FIG. 6 also employing both an ionization detection section and an optical detection section and an output comparator the input reference to which is controlled from the optical detection section of the system;

FIG. 8 is a schematic circuit diagram of a combination detector including both optical and ionization sections wherein one of the sections such as the ionization section controls the gain of the output from the optical section; and

FIG. 9 shows another circuit embodiment for a system employing an optical detection section and an ionization detection section and including an output transconductance amplifier functioning as a summing circuit for the outputs from the different sections of the system.

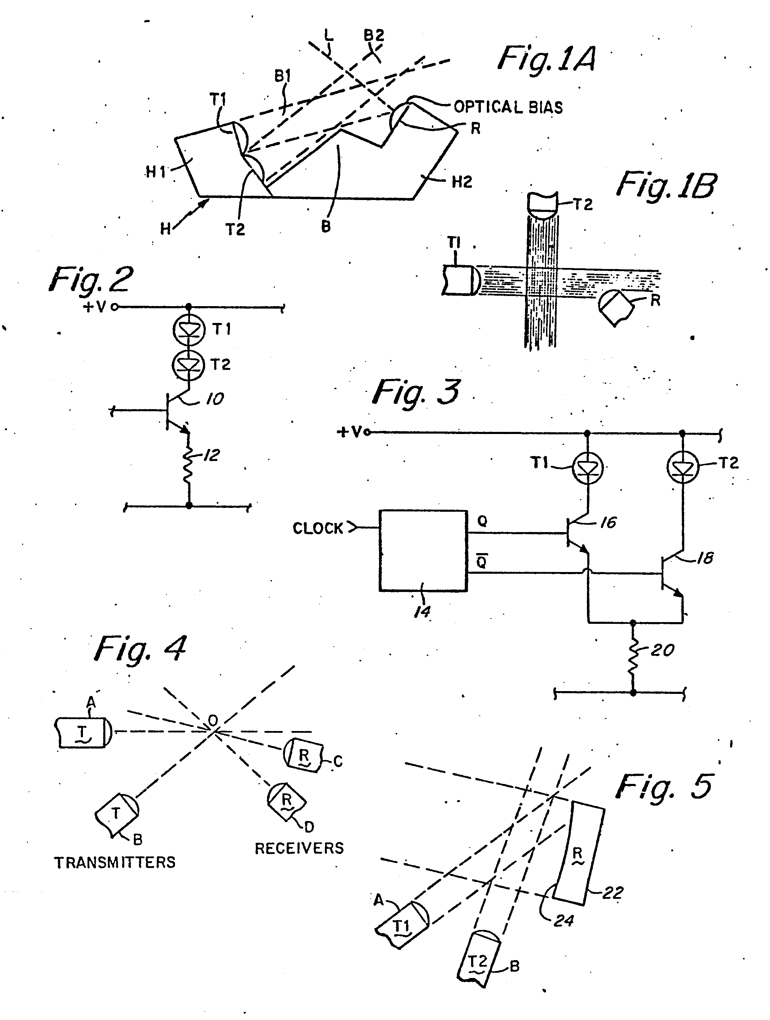

In accordance with one feature of the present invention there is described an improved optical detection system that substantially increases the spectrum of particle size that is detected. In this connection reference is made to FIGS. 1A and 1B which show two basic versions of the invention. In FIG. 1A there is shown a holder H for supporting a pair of transmitters and a single receiver. This holder includes a support section H1 for the transmitters T1 and T2 and a support section H2 for the receiver R. Each of the transmitters T1 and T2 has a ray or light beam associated therewith. Thus, the transmitter T1 has a beam B1 while the transmitter T2 has a beam B2. The holder H also includes a barrier B disposed between the transmitters and the receiver, which barrier provides a controlled amount of optical biasing for the receiver R. Both of the transmitters and the receiver may be supported in a conventional manner. The transmitters T1 and T2 may each comprise light emitting diodes such as a Galium Arsenide photo-diode. The receiver R may comprise a phototransistor or the like.

In FIG. 1A it is noted that each of the beams B1 and B2 are directed at a different angle to the field of view of the receiver. In this connection note the center line L of the field of view of the receiver R. With the arrangement of FIG. 1A the larger particles are detected from the beam B2 which is disposed at a more acute angle to the center line of the receiver. On the other hand the more obtuse angle of the beam/receiver path associated with beam B1 results in the detection of smaller particles. Typical angles that are used are angles of 90° and 150° associated with the beams B2 and B1, respectively, in comparison to the field of view of the receiver R.

FIG. 1B shows an alternate placement wherein the transmitters T1 and T2 are disposed orthogonally to each other with the receiver R being at an angle to each of these transmitters. This arrangement also provides for an improved broader spectrum of particle detection. In both FIGS. 1A and 1B the transmitters and the receiver are illustrated in a single plane. However, at least one of the transmitters may be directed in a different plane. Furthermore, it is possible to provide all components directed in different planar directions. FIGS. 4 and 5 described hereinafter show other arrangements of optical detection systems employing pairs of transmitters. The optical arrangements shown herein may be operated on a continuous basis or on a pulse basis. One type of transmitter receiver system is shown in my prior U.S. patent 4,126,790.

In my prior U.S. patent 4,126,790 there is shown a light source preferably driven on a pulse basis from a constant current source. Generally, the efficiency of such a drive system is low because there is a major portion of the voltage drop and the power lost across the series resistor which is in series with the light emitting device. However, because the light emitting diode which may be a Galium Arsenide diode has a low forward voltage drop, in accordance with the invention described herein, two or more diodes may be placed in series without drastically increasing the power or current consumption. FIG. 2 shows such a circuit arrangement including a pair of light emitting diodes identified by reference characters T1 and T2 in series with transistor 10 and resistor 12. The transistor 10 may be operated from an oscillator or the like on a pulse basis. Transistor 10 has its collector coupled to the light emitting diodes and has its emitter coupled to resistor 12. When the transistor 10 is conducting both of the diodes are operating, the net effect is to increase the amount of radiated power into the field of view of the receiver. For example, the transmitter shown in FIG. 2 may be the same transmitters shown in FIG. 1A having the receiver R associated therewith. It is also possible with the two diode arrangements to reduce power consumption by reducing the drive current to the transistor 10. Because there are two emitters now radiating into the space, and although each is at a lower output, the total flux will be at least as great as with the use of only one emitter at a higher current. Thus, there is an appreciable increase in efficiency with the use of two series arranged light emitting diodes or the like.

In accordance with another aspect of this invention, reference is now made to FIG. 3 wherein the diodes (transmitters T1 and T2) are operated on a sequential basis. Although in FIG. 2 two transmitters are shown, it is understood that more than two transmitters could also be used with each transmitter in sequence being operated. The circuit arrangement of FIG. 3 provides for sequential operation on essentially an alternating basis with each diode being operated at a 50% duty cycle. The circuit of FIG. 3 includes a bistable device of flip-flop 14 having a clock input, the frequency of which is dependent upon the duration that each emitter is to be on. FIG. 3 shows the assertion or Q output and also the negation or Q' output which couple respectively to transmitters 16 and 18 which have their emitters connected in common to the common resistor 20. Thus, when the output of the flip-flop 14 is at a set state, the Q output is high causing transistor 16 to conduct and causing illumination of the light emitting transmitter T1. In the set state of the flip-flop the negation output is low and thus transistor 18 is off. Upon the receipt of the next clock pulse the flip-flop 14 changes state to say a reset state thus causing the transistor 16 to cease conduction and causing conduction of the transistor 18 by virtue of the high output from the negation output terminal of the flip-flop 14. The arrangement of FIG. 3 permits a smaller duty cycle of operation and thus tends to increase the life of the transmitters. Again, if more than two transmitters are used a circuit arrangement can be provided wherein only one transmitter at a time is illuminated and where all transmitters are operated in sequence.

Both FIGS. 1A and 1B show the use of two transmitters in association with a single receiver. However, in an alternative arrangement a similar broad band detection is possible by the use of a single light source in association with a pair or more of receivers which are placed at different angles relative to the light source. In still other arrangements there may be provided both a plurality of receivers as well as a plurality of transmitters such as shown in the schematic illustration of FIG. 4 which shows the use of two transmitters at locations A and B and two receivers at locations C and D. This would provide a resultant coverage that would be very broad band. In FIG. 4 the angle BOD is an acute angle; the angle BOC is an intermediate angle slightly greater than 90° and the angles AOC and AOD are relatively wide obtuse angles. For example, the angle BOD may be 90°, the angle BOC may be 120°, the angle AOD may be 135°, and the angle AOC may be 160°.

FIG. 4 shows an arrangement wherein there are two receivers provided. FIG. 5 shows an alternative possibility wherein the two receivers are combined as a single receiver 22 which may be fabricated with a relatively large sensitive area 24 which may be of concave or parabolic shape as indicated. The area 24 preferably has a large acceptance angle. The light sensitive area of surface 24 may be arranged in a continuous strip or in segments in the form of a matrix and may be deposited either on a flat surface or on a curved surface as specifically indicated in FIG. 5. The shape of the substrate of the receiver 22 may be constructed so as to limit the field of view of the light sensitive material to that of the detection area for reflected or scattered light and thus reduce the effect of ambient radiation. As indicated, a concave or parabolic surface are two of the preferred configurations.

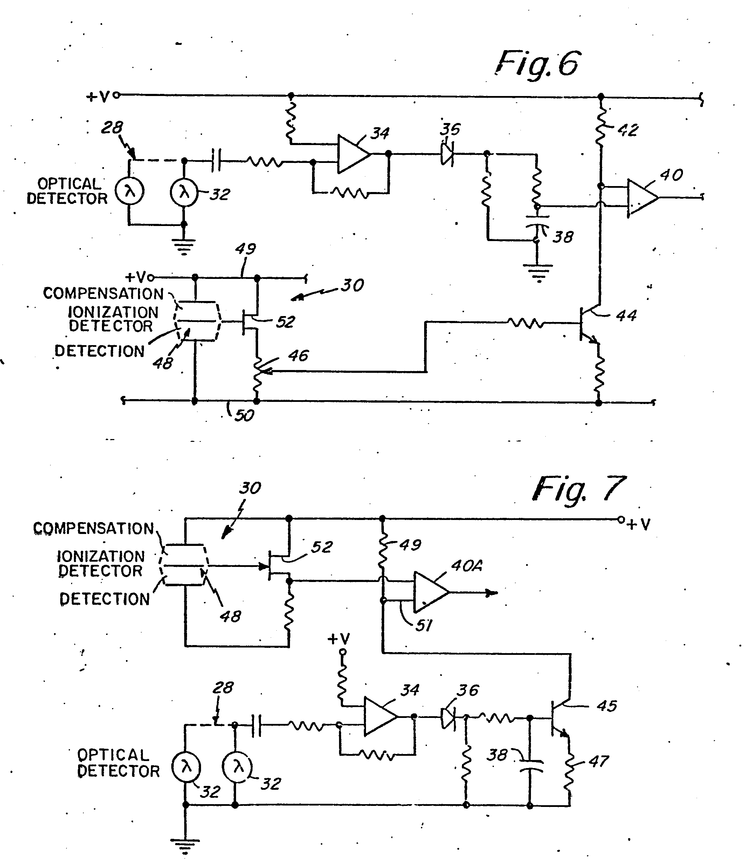

In FIGS. 1, 4 and 5 arrangements are shown for improving an optical detector's performance by means of multiple angle detections. Even so, there is still a lower limit of particle size detection. Thus, it is desirable to employ a combination detector preferably one including both an optical section and an ionization section. The ionization detector bridges the gap between the intermediate size particles and those down to less than 0.03 microns. A combination detector may use logic and delay circuits for combining the two modes of detection sometimes referred to as two separate channels. The following description is of another technique for combining the two different types of detection. In this connection reference is now made to FIG. 6 which shows a system including an optical detection section 28 and an ionization detection section 30. The optical detection may be in accordance with a system such as shown in my U.S. Patent No. 4,126,790. The ionization detection may be in accordance with the arrangement shown in my U.S. Patent 4,121,105. While the optical detection section 28 shown in FIG. 6 shows the use of multiple optical sensors 32, a single sensor may also be employed.

With regard to the optical detection section 28 the sensor 32 may include, for example, a power source or strobe generator coupling to an optical transmitting transducer that operates in association with a Galium Arsenide or Galium Phosphide optical emitter. In FIG. 6 the output from the one or more sensors couples to an amplifier 34, the output of which couples by way of diode 36 to an integrator circuit including the capacitor 38. The voltage across capacitor 38 is tied to the main input of comparator 40. The reference input to the comparator 40 is taken from a voltage divider network including resistor 42 and transistor 44. The transistor 44 has its degree of conduction control from the ionization detection section 30 of the detector. Thus, in the embodiment of FIG. 6 the main signal is from the optical detection section while the gain control or threshhold control is from the ionization detection section. The optical detector detects the larger particles and when this occurs there is an increase in the output signal from the amplifier 34 coupled by way of the diode 36 to cause an increase in the charge across capacitor 38. It is possible that the signal may not be sufficient to exceed the threshhold of the comparator as established by the network including resistor 42 and transistor 44. However, because the particulates are not mono-dispersed, upon the detection of smoke or the like the ionization section will have an output which will increase upon detection of smaller particles. This output coupled to the transistor 44 is used to lower the threshhold of the comparator and thus cause it to trip. The amount of threshhold is controlled by means of a potentiometer 46 or the like circuit such as one employing scaling resistors of fixed value.

The ionization detection section 30 comprises an ionization chamber 48 which may be of the type described in either of my U.S. patents Nos. 4,021,671 or 4,121,105. This chamber typically includes a detection chamber and a reference chamber. These chambers connect between opposite polarity lines 49 and 50. These lines also connect to an impedance converter comprising an FET source follower 52 having associated therewith the potentiometer 46. The common electrode from the chamber construction couples to the input electrode of the source follower 52. The output from the source follower is taken at the movable arm of the potentiometer 46. It is this voltage that controls the conduction of transistor 44. As the conduction of transistor 44 increases, the reference level at the reference input to the comparator decreases thus changing the threshhold or trigger level of the comparator.

In addition to the ionization detector sensing smaller particles, it also reacts to larger particles but providing a smaller signal change. Thus, the detection of the optical detector is enhanced even when smaller particles are not in abundance. This enhancement-mode detection technique allows for a detector that is neither an AND nor an OR configuration and thus avoid the disadvantages of these previous detectors taught in my copending application Serial No. 13,398. For an AND detector, two broadband sensors must be used if the full spectrum of detection is to be used. In an OR detector, the full spectrum of detection is possible, but if one sensor is very susceptible to the environment, then a false output is given. Such may be the case for the ionization portion of a combination detector which would be susceptible to air movement, or for the optical portion which would be susceptible to fast-rising ambient radiation. However, with the enhancement-mode detection of the present invention, if the ionization section, for example, either is too sensitive or completely fail's, the threshhold of the comparator is altered but not sufficiently to cause an output but merely to increase or decrease the sensitivity. Thus, with regard to the embodiment of FIG. 6 it is noted that there are two resistors in the voltage divider chain in addition to the conduction of transistor 44 that effects the reference input to the comparator.

FIG. 6 has shown a system wherein the ionization sensing portion modifies the threshhold of the optical output. The reverse arrangement is also usable as depicted in the circuit diagram of FIG. 7. In this instance, as the optical sensor detects particulates, the threshhold of the comparator 40A is reduced to thus essentially increase the sensitivity of the device and cause an alarm condition at a lower input signal from the ionization portion.

In FIG. 7 like reference characters are used to identify like components previously discussed with reference to FIG. 6. Thus, in FIG. 7 there is shown an optical detection section 28 comprising a pair of sensors 32, and an ionization detection section 30 comprising the ionization chamber 48. The optical detection section 28 also includes an amplifier 34 which may be a conventional operational amplifier, diode 36 and integrating capacitor 38. The output of capacitor 38 is coupled to the input electrode of transistor 45. The transistor 45 has associated therewith an emitter resistor 47 which forms a part of a voltage divider network also including resistor 49, which network couples to the reference input of the comparator 40A. The main input to the comparator 40A is taken from the output of the source follower 52 which in turn is driven from the output of the ionization detector chamber 48. In the circuit arrangement of FIG. 7 rather than having a potentiometer at the output electrode of the follower 52, there is provided a resistor connected in series from the output with the output signal taken from the output electrode of the source follower coupled to the main input of the comparator 40A.

With the arrangement of FIG. 7 there may be an output from the ionization detection section that is not sufficient to trip the comparator 40A. However, when the optical detection portion also senses the detection of particulates, then the conduction of transistor 45 increases causing a drop in the voltage level on the input reference line 51 thus effectively lower the triggering level of the comparator 40A. This mode of operation is referred to herein as enhancement-mode detection.

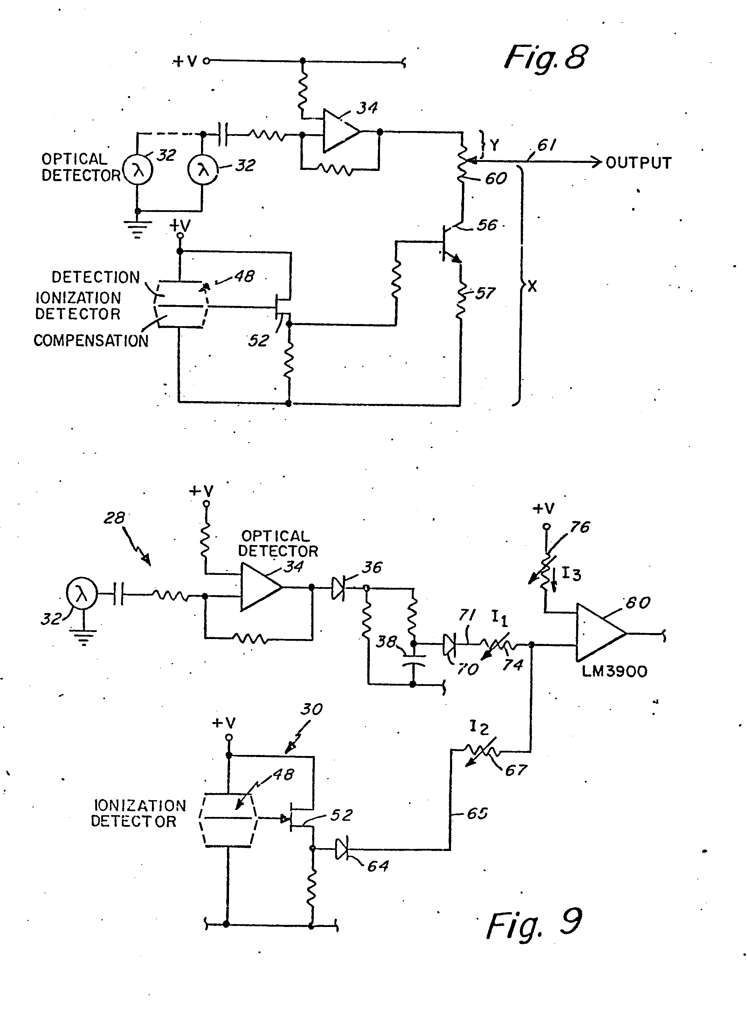

In accordance with the form of detection described in accordance with this invention, the output of one sensor may be used to increase the gain or output of the second detector. In this connection FIG. 8 shows a circuit schematic diagram wherein the gain from an optical detection section is altered from the ionization detection section. FIG. 8 shows an arrangement wherein the ionization sensor output decreases in the presence of particulates. This is easily arranged in a detector by sampling the voltage across the reference chamber rather than detection chamber.

In FIG. 8 there is shown the ionization chamber 48 having associated therewith the FET source follower 52. The output from the source follower couples to the bipolar transistor 56. The transistor 56 has an emitter resistor 57 and has its collector coupled to a potentiometer 60. The optical portion of the system includes the sensors 32 which couple to amplifier 34. The output of the amplifier 34 which may be an operational amplifier, couples to one side of potentiometer 60. The movable arm of the potentiometer 60 is the output line as indicated in FIG. 8.

With a detection, as previously indicated, the ionization detector is set up so that the voltage output from the source follower 52 decreases. This causes the transistor 56 to decrease induction thus causing its collector voltage to increase. The transistor 56 essentially functions as a resistor whose impedance increases as the voltage at its input base decreases. The net result is that the voltage at line 61 increases due to the ratio of y:x increasing. In this way the sensitivity of the detector is enhanced. In still a further embodiment of the invention one can interchange the outputs of the two detectors so that the optical detector is used to alter the output level of the ionization detector.

FIG. 9 shows still a further embodiment of the present invention again employing an optical detection section 28 and an ionization detection section 30. The optical detection section 28 includes an optical detector 32 whose output couples to an amplifier 34. The output of amplifier 34 couples by way of diode 36 to the integrator circuit including capacitor 38. The ionization detector may be of the type previously described including chamber 48 and source follower 52. The output from the source follower which is preferably an FET, couples by way of diode 64 and line 65 to a variable resistor 67. Similarly, the output from the optical detector taken across capacitor 38 copules by way of the diode 70 to line 71 and a second variable resistor 74. The variable resistors 74 and 67 along with variable resistor 76 which represents a reference input, are coupled to the transconductance amplifier 80. The embodiment shown in FIG. 9 has additive inputs as represented by the signals coupled through the variable resistances 67, 74 and 76. The values of the resistors 67 and 74, in particular, can be selected to favor one or the other detector or favor neither detector. The transconductance amplifier 80 may be constructed from an LM3900 device. There is typically a low output from the device 80 when the input current I3 is greater than the sum of the currents I1 + I2. On the other hand the output from the device 80 is in its high state if the sum of the currents I1 + I2 is greater than the current I3. The ratio of the optical detector current to the ionization detector current is controlled by varying the values of the resistors 67 and 74. The overall sensitivity control is by means of the variable resistor 76.

Having described a limited number of embodiments of this invention, it should now become apparent to those skilled in the art that numerous other embodiments are contemplated as falling within the scope of this invention. For example, with regard to the combination detector described herein, examples have been shown wherein the combination includes an ionization section and an optical section. In alternate arrangements both sections could be optical or both could be of the ionization type or there could possibly even be another type of detection that is employed in the combination. However, the preferred arrangement is one employing an optical detector and an ionization detector.

What is claimed is:

0076338

C L A I M S

1.   In an optical detection system, a plurality of optical transmitters each having a beam path, means supporting the transmitters, at least one optical receiver having a field of view and means supporting the optical receiver, the beam path of the transmitters each being at a different angle to the field of view of the optical receiver.

2.   In an optical detection system as set forth in claim 1 including at least two optical receivers arranged at an acute angle to each other.

3.   In an optical detection system as set forth in claim 1 wherein said optical transmitters are arranged at an acute angle to each other.

4.   In an optical detection system as set forth in claim 2 wherein said optical transmitters are arranged at an acute angle to each other.

5.   In an optical detection system as set forth in claim 1 including barrier means disposed between said transmitters and receiver for optically biasing the receiver.

6.   In an optical detection system as set forth in claim 1 wherein said angles may include an acute angle up to about 90° and an obtuse angle.

7.   In an optical detection system as set forth in claim 1 wherein the transmitters are disposed at a 90° angle to each other.

8.   In an optical detection system, a plurality of optical receivers each having a receiving field of view, means supporting the receivers, at least one optical transmitter having a beam path and means supporting the optical transmitter, the field of view of the receivers each being at a different angle to the beam path of the transmitter.

9. In an optical detection system as set forth in claim 8 including at least two optical transmitters arranged at an acute angle to each other.

10. In an optical detection system having a transmitter section and a receiver section, said transmitter section including a plurality of light emitting means and means commonly driving the light emitting means to provide concurrent illumination thereof.

11. In an optical detection system as set forth in claim 10 wherein said light emitting means includes a light emitting diode and said means driving includes a current controlled semiconductor means for providing a constant current through the diodes.

12. In an optical detection system as set forth in claim 11 wherein the semiconductor means includes a transistor having the diodes connected in series to a main electrode of the transistor.

13. In an optical detection system having a transmitter section and a receiver section, said transmitter section including a plurality of light emitting means and means for sequentially operating the light emitting means.

14. In an optical detection system as set forth in claim 13 wherein said means for sequentially operating includes means for alternatively operating a pair of the light emitting means.

15. In an optical detection system as set forth in claim 14 wherein the light emitting means includes at least a pair of light emitting diodes and the means for operating includes bistable means having opposite outputs for alternatively operating the diodes.

16. In an optical detection system as set forth in claim 15 including a semiconductor switch in series with each diode and operated from the bistable means.

17. In an optical detection system as set forth in claim 1 wherein the optical receiver has a relatively wide field of view including a focusing curved sensitivity surface.

18. A smoke and particle detector comprising; an optical detection means including optical detection circuitry for providing a detection signal, an ionization detection means including ionization detection circuitry for providing a reference or threshhold signal and output decision means responsive to said detection signal and reference signal for providing an output alarm signal.

19. A smoke and particle detector as set forth in claim 18 wherein said output decision means includes a comparator means having one input for receiving the reference or threshhold signal and another input for receiving the detection signal.

20. A smoke and particle detector as set forth in claim 19 including a threshhold circuit having a node coupled to the one input of the comparator means and semiconductor means providing a variable impedance for the threshhold circuit and controlled from the ionization detection circuitry.

21. A smoke and particle detector as set forth in claim 18 wherein the output decision means includes gain control means.

22. A smoke and particle detector as set forth in claim 21 wherein the gain control means includes voltage divider means including semiconductor control means the conduction of which is controlled from the ionization detection circuitry.

23. A smoke and particle detector as set forth in claim 18 wherein the output decision means includes summing means.

24. A smoke and particle detector comprising: a first detection means including first detection circuitry for providing a first detection signal, a second detection means including second detection circuitry for providing a second reference or threshhold signal, and output decision means responsive to both set signals from said first and second means for providing an output alarm signal.

0076338

1/3

Fig. 1A

OPTICAL BIAS

Fig. 1B

Fig. 2

Fig. 3

Fig. 4

TRANSMITTERS    RECEIVERS

Fig. 5

Fig.6

Fig. 7

*Fig.8*

OPTICAL DETECTOR (λ) 32  (λ) 32

34

Y 61 → OUTPUT
60
56
57
X

DETECTION IONIZATION DETECTOR COMPENSATION 48

+V

52

*Fig. 9*

28

OPTICAL DETECTOR 34

32 (λ)

36

38

71 I₁ 70 74

+V 76 I₃

80 LM3900

I₂ 67

65

30

IONIZATION DETECTOR 48

52

64

0076338

European Patent
Office

EUROPEAN SEARCH REPORT

Application number

EP 81 10 7912

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US – A – 3 553 462 (D. JOHNSON)  * columns 2-3; figure 1 * | 1,7,13 14 | G 01 N 21/53 G 08 B 17/10 |
| A | US – A – 3 775 013 (R. SIMMS)  * columns 3,5; figures 2,4 * | 1,5,7, 9 | |
| D,A | US – A – 4 121 110 (E. SOLOMON)  * columns 2-3; figures 1,3 * | 1 | |
| A | PATENT ABSTRACTS OF JAPAN, vol. 1, no. 156, December 13, 1977 page 8468E77 & JP – A – 52 99 874 (MATSUSHITA DENKO K.K.)  * entire document * | 2,5,8 | TECHNICAL FIELDS SEARCHED (Int. Cl. ³)  G 01 N 21/53 21/47 G 08 B 17/10 |
| A | US – A – 3 869 209 (W. SIGRIST)  * column 4; figure 2 * | 2 | |
| A | PATENTS ABSTRACTS OF JAPAN, vol. 3, no. 99, (E-132), August 22, 1979 & JP – A – 54 77 193 (MATSUSHITA DENKO K.K.)  * entire document * | 1,18 ./. | |

~~The present search report has been drawn up for all claims~~

| Place of search | Date of completion of the search | Examiner |
|---|---|---|
| The Hague | 03-06-1982 | BOEHM |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03 82

European Patent
Office

EUROPEAN SEARCH REPORT

0076338
Application number

EP 81 10 7912 -2-

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | US - A - 4 225 860 (F. CONFORTI) <br><br> * columns 3-5; figure 1 * <br><br> --- | 1 | |
| D,A | US - A - 4 126 790 (E. SOLOMON) <br><br> * column 2; figures 1-3 * <br><br> --------- | 1 | |
| | | | TECHNICAL FIELDS SEARCHED (Int. Cl. 3) |

EPO Form 1503.2  06.78

European Patent
Office

## CLAIMS INCURRING FEES

The present European patent application comprised at the time of filing more than ten claims.

☐ All claims fees have been paid within the prescribed time limit. The present European search report has been drawn up for all claims.

☐ Only part of the claims fees have been paid within the prescribed time limit. The present European search report has been drawn up for the first ten claims and for those claims for which claims fees have been paid,

namely claims:

☐ No claims fees have been paid within the prescribed time limit. The present European search report has been drawn up for the first ten claims.

## X | LACK OF UNITY OF INVENTION

The Search Division considers that the present European patent application does not comply with the requirement of unity of invention and relates to several inventions or groups of inventions.

namely:

1. claims 1-17:  Optical particle detection system
by light scattering with detectional
different angles of view

2. claims 18-24: Smoke and particle detectors with
threshold ionization detector and
optical detector

☐ All further search fees have been paid within the fixed time limit. The present European search report has been drawn up for all claims.

☐ Only part of the further search fees have been paid within the fixed time limit. The present European search report has been drawn up for those parts of the European patent application which relate to the inventions in respect of which search fees have been paid,

namely claims:

☒ None of the further search fees has been paid within the fixed time limit. The present European search report has been drawn up for those parts of the European patent application which relate to the invention first mentioned in the claims,

namely claims:   1-17